# EUROPEAN PATENT APPLICATION

(11) **EP 2 030 842 A2**
(43) Date of publication of application: **04.03.2009**
(21) Application number: 08105100.5
(22) Date of filing: 22.08.2008
(51) Int. Cl.: B60R 7/04, B60N 2/20

(54) **Storage box structure for vehicle**

(30) Priority: 29.08.2007 JP 2007222343; 29.08.2007 JP 2007222344
(71) Applicant: Mazda Motor Corporation, Fuchu-cho Aki-gun Hiroshima, Hiroshima 730-8670 (JP)
(72) Inventor: Kusu, Hirotaka, Hiroshima Hiroshima (JP); Tomita, Toshihiko, Hiroshima Hiroshima (JP); Tabata, Kouji, Hiroshima Hiroshima (JP); Matsuoka, Kan, Hiroshima Hiroshima (JP); Ioka, Tadashi, Hiroshima Hiroshima (JP)
(74) Representative: Zinnecker, Armin

(57) **Abstract**

Disclosed is a storage box structure for a vehicle having a plurality of unit seats 5, 6, 7 to 9, 10, 11 each provided on a floor panel 1 to serve as a passenger seat. The storage box structure comprises a storage box 40 (60) adapted to store an article therein and to be releasably locked relatively to a box support portion 36 provided to a back surface of a seat back 18 (21) of at least one of the unit seats. The seat back 18 (21) of the at least one unit seat is supported displaceably between a standing position where it stands upwardly, and a folded position where it is folded down on a seat cushion 17 (20) of the at least one unit seat. The storage box 40 (60) includes a box body 42 (62) having a storage space 41 (61) defined to be opened upwardly when the box body 42 (62) is supported relative to the back surface of the seat back 18 (21) set in the folded position, and a lid member 43 (67) adapted to openably close a top opening of the box body 42 (62). The storage box structure of the present invention can achieve an excellent balance between ensuring of a maximum seating capacity and improvement in usability of the storage box.

## Description

### BACKGROUND OF THE INVENTION

### 1. Field of the Invention

The present invention relates to a storage box structure for a vehicle having a plurality of passenger seats provided on a floor panel and each equipped with a seat cushion and a seat back adapted to stand upwardly from a rear end of the seat cushion, wherein the storage box structure comprises a storage box adapted to store an article therein and supported relative to a back surface of the seat back of at least one of the plurality of passenger seats.

### 2. Description of the Background Art

Heretofore, there has been known a storage box for use in a vehicle interior compartment to store an article therein, wherein a plurality of strikers are arranged at different positions in the vehicle interior compartment, and engagement means engageable with each of the strikers is provided on a bottom surface of the storage box to allow the storage box to be selectively mounted in one of the positions, as disclosed, for example, in JP 2006-21608A.

Specifically, in the patent document, the strikers are provided, respectively, in a first floor position between a driver seat and a front passenger seat which make up a first seat row, a second floor position between a pair of right and left rear passenger seats disposed behind the first seat row to make up a second seat row, and a third floor position between a pair of right and left rear passenger seats disposed behind the second seat row to make up a third seat row, to allow the storage box to be selectively mounted in one of three frontward-rearward (i.e., longitudinal) positions of a floor of the vehicle interior compartment.

In the structure disclosed in the patent document, a mounting position of the storage box can be appropriately changed to mount the storage box in a position convenient for a passenger so as to effectively improve usability of the storage box. However, the structure of the patent document designed to mount the storage box to a floor position between a pair of passenger seats arranged in side-by-side relation in a widthwise (i.e., lateral) direction of a vehicle involves a problem about a reduction in installation space of passenger seats due to the presence of the storage box, which leads to a reduction in upper limit on a total number of persons permitted on a vehicle (maximum seating capacity).

### SUMMARY OF THE INVENTION

In view of the above circumstances, it is an object of the present invention to provide a vehicle storage box structure capable of achieving an excellent balance between ensuring of a maximum seating capacity and improvement in usability of a storage box.

In order to achieve the above object, the present invention provides a storage box structure for a vehicle having a plurality of passenger seats provided on a floor panel and each equipped with a seat cushion and a seat back adapted to stand upwardly from a rear end of the seat cushion. The storage box structure comprises a storage box adapted to store an article therein and to be supported relative to a back surface of the seat back of at least one of the plurality of passenger seats. The seat back of the at least one passenger seat is supported displaceably between a standing position where it stands upwardly, and a folded position where it is folded down on the seat cushion. The storage box includes a box body having a storage space defined to be opened upwardly when the box body is supported relative to the back surface of the seat back set in the folded position, and a lid member adapted to openably close a top opening of the box body. The storage box is adapted to be releasably locked relative to a box support portion provided in the back surface of the seat back of the at least one passenger seat.

In the storage box structure of the present invention, the box support portion adapted to support the storage box for storing an article therein is provided to the seat back of at least one of the plurality of passenger seats. Thus, differently, for example, from a storage box structure designed to mount a storage box onto a floor panel in the conventional manner, the storage box structure of the present invention has an advantage of being able to store an article using the storage box according to need while maximizing a maximum seating capacity, without the need for sacrificing an installation space of passenger seats to ensure a mounting position of the storage box.

In addition, the storage space of the storage box is defined to be opened upwardly when the seat back supporting the storage box is displaced to the folded position. Thus, when the seat back is folded down to use the storage box supported relative to the back surface of the seat back, a passenger can readily access to the storage space of the storage box from the top opening of the storage space so as to take an article in and out of the storage box.

Furthermore, the storage box is adapted to be releasably locked relative to the box support portion provided to the seat back of the at least one passenger seat. Thus, for example, in a non-use mode of the storage box, the storage box can be demounted from the seat back, and moved to a position causing no obstruction. This provides an advantage of being able to more adequately ensure passenger comfort in the vehicle interior compartment in the non-use mode.

Preferably, in the storage box structure of the present invention, when the vehicle has, on the floor panel, a seat row made up of three of the plurality of passenger seats, wherein the three passenger seats are arranged in side-by-side relation in a lateral direction of the vehicle, and wherein the at least one passenger seat comprises at least a central one of the three passenger seats, and the box support portion is provided to the seat back of at least the central passenger seat.

According to this feature, the box support portion is provided to the seat back of at least the central one of the three passenger seats arranged in side-by-side relation in the lateral direction of the vehicle, so that each of two passengers seated in respective ones of the passenger seats on the right and left sides of the central passenger seat can use the storage box. Thus, differently from a storage box structure where the box support portion is provided only to another passenger seat other than the central passenger seat, the above storage box structure has an advantage of being able to effectively enhance utility value of the storage box.

Preferably, in the storage box structure of the present invention, when the at least one passenger seat comprises two or more of the plurality of passenger seats, the box support portion is provided to each of the seat backs of the two or more passenger seats, to allow the storage box to be selectively mounted to either one of the two or more seat backs.

According to this feature, the mounting position of the storage box can be flexibly changed depending on which of the plurality of passenger seats a passenger who intends to use the storage box occupies. This provides an advantage of being able to more effectively improve usability of the storage box.

Preferably, in the above storage box structure, the two or more passenger seats are disposed in front of and adjacent to a rear luggage area of a vehicle interior compartment.

According to this feature, in the non-use mode of the storage box, the storage box can be mounted to the passenger seat adjacent to the rear luggage area. This provides an advantage of being able to appropriately ensure a mounting position of the storage box in the non-use mode without narrowing a utility space for passengers.

Preferably, in the storage box structure of the present invention, when the vehicle has, on the floor panel, at least three seat rows which are arranged parallel to each other in a longitudinal direction of the vehicle and each of which is made up of two or more of the plurality of passenger seats, wherein the two or more passenger seats are arranged in side-by-side relation in a lateral direction of the vehicle, the at least one passenger seat is comprised in a longitudinally intermediate one of the at least three seat rows, and the box support portion is provided to at least one of the seat backs in the longitudinally intermediate seat row.

According to this feature, the box support portion is provided to at least one of the seat backs in the longitudinally intermediate one of the at least three seat rows, so that not only a passenger seated in the longitudinally intermediate seat row but also a passenger seated in the seat row in front of or behind the longitudinally intermediate seat can access to the storage box. This provides an advantage of being able to allow more passengers to utilize the storage box.

Preferably, in the storage box structure of the present invention, the at least one passenger seat having the seat back provided with the box support portion includes a displacement mechanism adapted to displace the seat cushion downwardly by a given distance in conjunction with the displacement of the seat back toward the folded position.

According to this feature, a height position of the back surface (i.e., mounting surface) of the seat back of the at least one passenger seat in the folded position can be relatively lowered. This provides an advantage of being able to effectively avoid an undesirable situation where a height position of the storage box supported relative to the back surface of the folded seat back is excessively raised in a use mode of the storage box to cause deterioration in usability of the storage box.

Preferably, in the storage box structure of the present invention, the storage box is adapted to be releasably locked relative to a box holding portion provided to a lateral wall of the vehicle interior component.

According to this feature, the mounting position of the storage box in the non-use mode can be easily ensured by utilizing a portion other than seat back of the at least one passenger seat. This provides an advantage of being able to variously utilize a space in the vehicle interior compartment while mounting the storage box in an appropriate position depending on the situation.

Preferably, in the storage box structure of the present invention, the storage box includes a table member adapted to allow an article to be placed thereon, and supported movably in a longitudinal direction of the vehicle, relative to the box body of the storage box in a state after being mounted to the seat back set in the folded position, in such a manner that a top surface of the table member in a state after being moved to a frontmost position in a movable range thereof forms an approximately continuous table surface in cooperation with a top surface of a mount member disposed in front of the at least one passenger seat.

According to this feature, an article, such as a small article, can be readily placed on the table member of the storage box to more improve utility of the storage box. In addition, in the state after the table member is moved to the frontmost position in the movable range thereof relative to the box body of the storage box, an approximately continuous table surface is formed by the top surface of the table member and the top surface of the mount member disposed in front of the table member. This provides an advantage of being able to form a longitudinally-continuous wide table surface in the vehicle interior compartment using a simple structure, and reliably support an article, e.g., even a large article which cannot be supported only by the table member.

Preferably, in the above storage box structure, when the vehicle has, on the floor panel, a first seat row made up of a driver seat and a front passenger seat, and a second seat row made up of two or more of the plurality of passenger seats and arranged behind the first seat row, the at least one passenger seat is comprised in the second seat row, and the storage box with the table member is adapted to be supported relative to at least one of the seat backs in the second seat row. Further, the mount member comprises a console box provided between the driver seat and the front passenger seat.

According to this feature, a wide table surface allowing passengers seated in both the first and second seat rows to access thereto can be formed based on a simple and economical structure utilizing the existing console box. This provides an advantage of being able to allow more passengers to place an article or the like on the table surface, and more effectively achieve improvement in utility of the storage box based on the table member.

Preferably, in the above storage box structure, when the vehicle has, on the floor panel, a seat row made up of three of the plurality of passenger seats, wherein the three passenger seats being arranged in side-by-side relation in a lateral direction of the vehicle, the at least one passenger seat comprises a central one of the three passenger seats, and the storage box with the table member is adapted to be supported relative to the seat back of the central passenger seat.

According to this feature, the storage box with the table member is mounted to the laterally central passenger seat, so that each of two passengers seated in respective ones of the passenger seats on the right and left sides of the laterally central passenger seat can use the table surface. This provides an advantage of being able to more effectively enhance the utility value of the table member.

Preferably, in the above storage box structure, the storage box includes a pair of armrest members disposed laterally on both sides of the table member and adapted to allow an elbow of a passenger to be placed thereon, wherein each of the armrest members is supported movably in the longitudinal direction of the vehicle, relative to the box body of the storage box in a state after being mounted to the seat back set in the folded position.

According to this feature, the armrest members adapted to allow an elbow of a passenger to be placed thereon are disposed laterally on both sides of the table member, so that a passenger can sit in a more comfortable posture to allow passenger comfort during seating to be effectively improved. In addition, each of the armrest members is supported movably in the longitudinal direction of the vehicle, relative to the seat back. This provides an advantage of being able to adjust a longitudinal position of the armrest member in conformity to a position of the passenger's elbow so as to more adequately support the passenger's elbow by the armrest member.

Preferably, in the above storage box structure, the storage box includes a pair of cup holders disposed laterally on both sides of the table member and adapted to be selectively concealed and exposed in conjunction with the longitudinal movement of the armrest members.

According to this feature, the armrest members are arranged at positions where they cover the respective cup holders, in a normal state. Then, the armrest members can be moved in the longitudinal direction to expose the cup holders, as needed, so as to adequately hold a beverage container or the like using the cup holders.

### BRIEF DESCRIPTION OF THE DRAWINGS

FIG. 1 is a general perspective view showing a vehicle storage box structure according to a first embodiment of the present invention.
FIG. 2 is a perspective view showing an external appearance of a unit seat constituting a second seat row.
FIG. 3 is a schematic side view of the unit seat.
FIG. 4 is a side view showing a state after a seat back of the unit seat is folded down.
FIG. 5 is a general perspective view showing an inside of a vehicle interior compartment to explain one example of a use mode of a storage box.
FIG. 6 is a perspective view showing the use mode of the storage box, when viewed from another angle.
FIG. 7 is a perspective view showing the use mode of the storage box, wherein a lid member of the storage box is manually opened.
FIG. 8 is a general perspective view showing one example of a non-use mode of the storage box.
FIG. 9 is an explanatory diagram showing an operation of mounting the storage box to the seat back of the unit seat.
FIG. 10 is an explanatory diagram of a movement of a hook of the storage box during a course of engagement with a box support portion of the seat back, wherein FIG. 10A shows an intermediate state, and FIG. 10B shows a state after completion of the engagement.
FIG. 11 is a general perspective view showing another example of the non-use mode of the storage box.
FIG. 12 is a general perspective view showing another example of the use mode of the storage box.
FIG. 13 is a general perspective view showing yet another example of the use mode of the storage box.
FIG. 14 is a general perspective view for explaining one example of modification of the vehicle storage box structure.
FIG. 15 is a perspective view showing a vehicle storage box structure according to a second embodiment of the present invention.
FIG. 16 is a perspective view showing a state after a table member of a storage box is moved to a frontmost position.
FIG. 17 is a schematic top plan view showing the state after the table member of the storage box is moved to the frontmost position.

### DESCRIPTION OF THE PREFERRED EMBODIMENTS

### [FIRST EMBODIMENT]

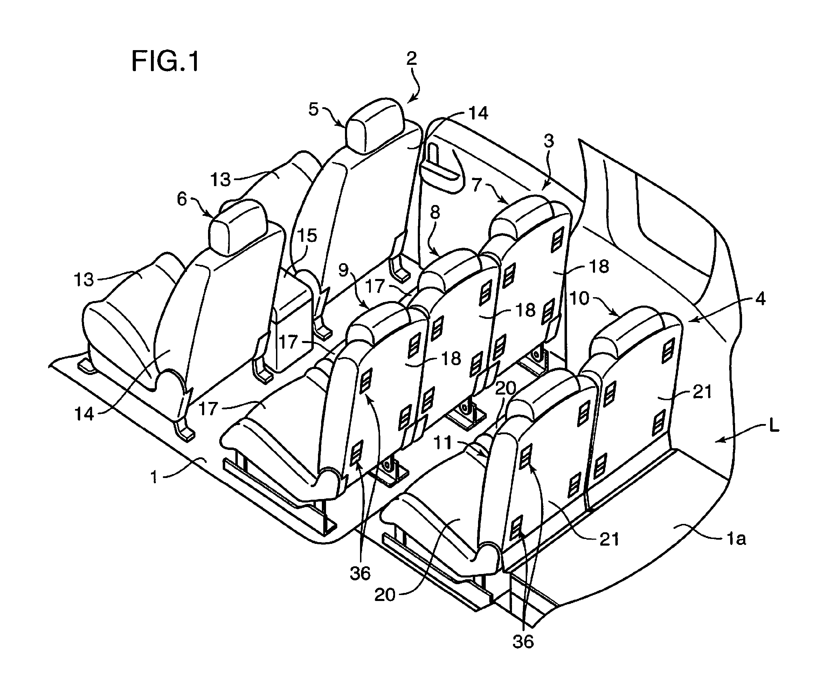

FIG. 1 is a general perspective view showing a vehicle storage box structure according to a first embodiment of the present invention. As shown in FIG. 1, in a vehicle interior compartment of a vehicle, a first seat row 2, a second seat row 3 and a third seat row 4 are arranged parallel to each other in a frontward-rearward (i.e., longitudinal) direction of the vehicle in this order. Specifically, the first seat row 2 is made up of a driver seat 5 and a front passenger seat 6, and disposed on a frontmost side of a floor panel 1 defining a bottom surface of the vehicle interior compartment. Each of the second and third seat rows 3, 4 is made up of two or more rear passenger seats arranged in side-by-side relation in a widthwise (i.e., lateral) direction of the vehicle (more specifically, the second and third seat rows 3, 4 are made up, respectively, of three unit seats 7 to 9, and two unit seats 10, 11, as will be described later). The vehicle in this embodiment is a type with a right-hand steering wheel, and therefore a right seat and a left seat in the first seat row 2 serve as the driver seat 5 and the front passenger seat 6, respectively.

Each of the driver seat 5 and the front passenger seat 6 of the first seat row 2 comprises a seat cushion 13 defining a seating surface, and a seat back 14 pivotally supported relative to a rear end of the seat cushion 13 and adapted to stand upwardly. The driver seat 5 and the front passenger seat 6 are arranged in side-by-side, spaced-apart relation to each other in the lateral direction, and a console box 15 having a function, such as an armrest allowing an elbow of a driver or a passenger seated in the front passenger seat 6 to be placed thereon, is provided on a portion of the floor panel 1 located between the driver seat 5 and the front passenger seat 6, to protrude upwardly from the floor panel 1.

The second seat row 3 is made up of three unit seats 7 to 9 arranged in side-by-side relation in the lateral direction, wherein each of the unit seats 7 to 9 is equipped with a seat cushion 17 and a seat back 18, independently. The third seat row 4 is made up of two unit seats 10, 11 arranged in side-by-side relation in the lateral direction, wherein each of the unit seats 10, 11 is equipped with a seat cushion 20 and a seat back 21, independently.

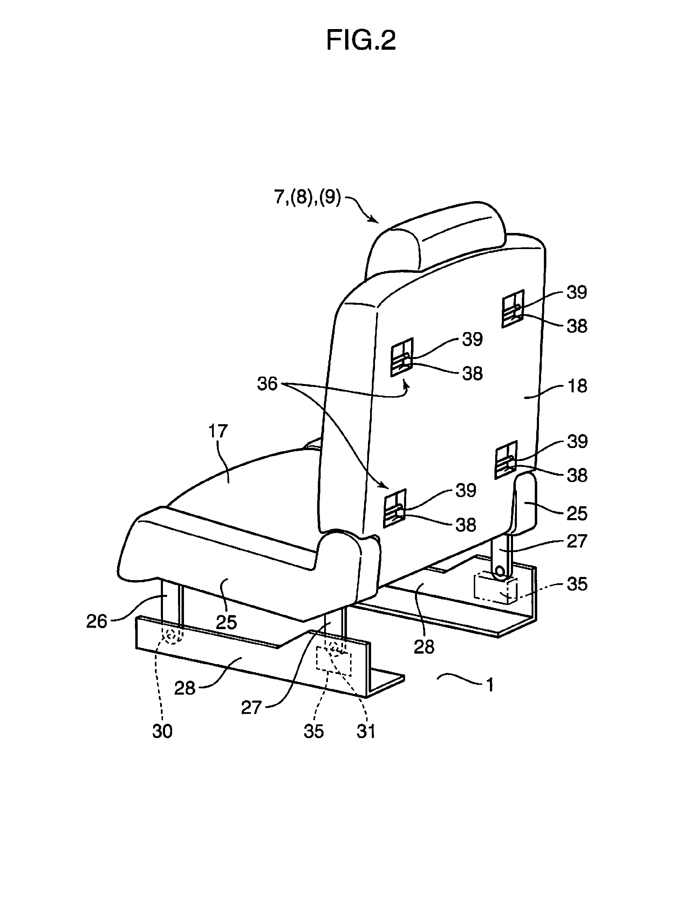

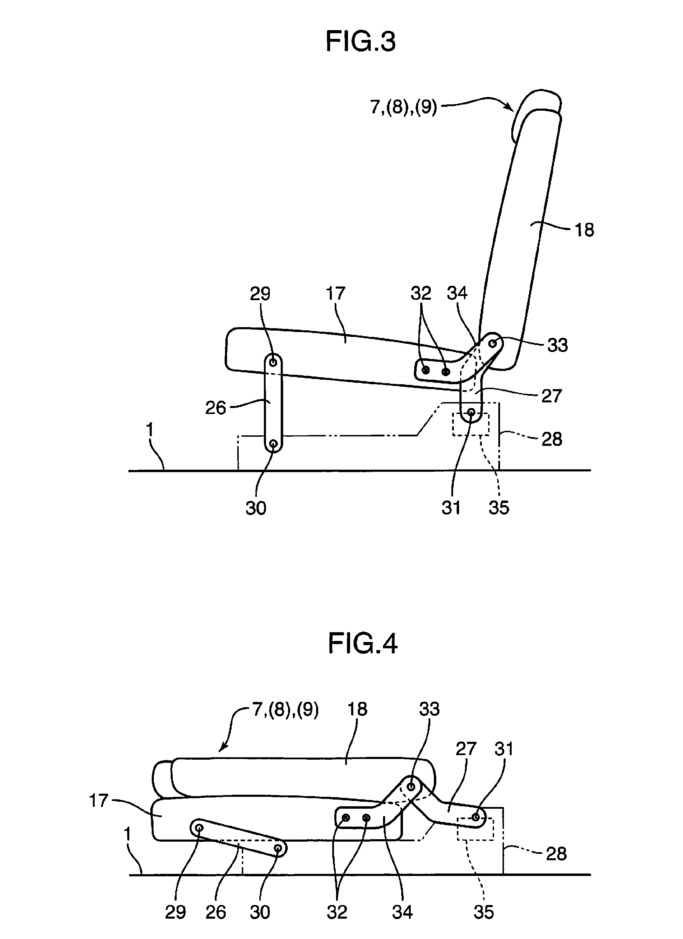

As shown in FIGS. 2 and 3, each of the unit seats 7 to 9 in the second seat row 3 is supported relative to a pair of right and left support plates 28 set on the floor panel 1, through two pairs of front and rear links 26, 27 each extending upwardly. Each of the front links 26 has an upper end pivotally supported relative to a lateral surface of a front portion of the seat cushion 17 through a pivot shaft 29, and a lower end pivotally supported relative to a front portion of the support plate 28. Each of the rear link 27 has an upper end fixed to a lateral surface of a lower end of the seat back 18 through a fastening member (not shown), and a lower end pivotally supported relative to a rear portion of the support plate 28 through a pivot shaft 31. In FIG. 2, the reference numeral 25 indicates a protective cover which covers right and left sides of the seat cushion 13 and others to conceal the upper ends (i.e., connection portions to the seat cushion 17 and the seat back 18) of the front and rear links 26, 27, and others. FIG. 3 shows one of the unit seats 7 to 9 in a state after detaching the protective cover 25.

A link 34 is fixed to a lateral surface of a rear portion of the seat cushion 17 through a fastening member 32. The coupling link 34 extends from a fixed portion relative to the seat cushion 17 curvedly upwardly and rearwardly, and a distal end of the coupling link 34 is pivotally supported relative to the upper end of the rear link 27 through a pivot shaft 33.

The support plate 28 is provided with a lock device 35 adapted to hold the lower end of the rear link 27 so as to restrain the rear link 27 from being rotated about the pivot shaft 31. In a normal state, a rotational displacement of the rear link 27 is restrained by the lock device 35 to allow the seat back 18 to be held in a standing position where it stands upwardly relative to the seat cushion 17, while allowing the seat cushion 17 to be held in a position where it is spaced apart from the support plate 28 upwardly by a given distance, as shown in FIGS. 2 and 3.

An operation lever (not shown) associated with an internal gear mechanism of the lock device 35 is provided at a given position of the seat cushion 17 or the seat back 18, in such a manner that a locked state of the rear link 27 by the lock device 35 is released in response to a passenger's manual operation of the operation lever. In a state after the locked state of the rear link 27 is released, when a passenger applies a force to the seat back 18 in a direction for pushing down the seat back frontwardly, the rear link 27 is rotationally displaced frontwardly together with the seat back 18, as shown in FIG. 4. Simultaneously, the coupling link 34 is swingingly displaced frontwardly and downwardly, and the front link 26 is rotationally displaced frontwardly. According to these displacements, the seat cushion 17 is moved frontwardly and downwardly, and the seat back 18 is displaced to a folded position where it is folded down on the seat cushion 17, as shown in FIG. 4.

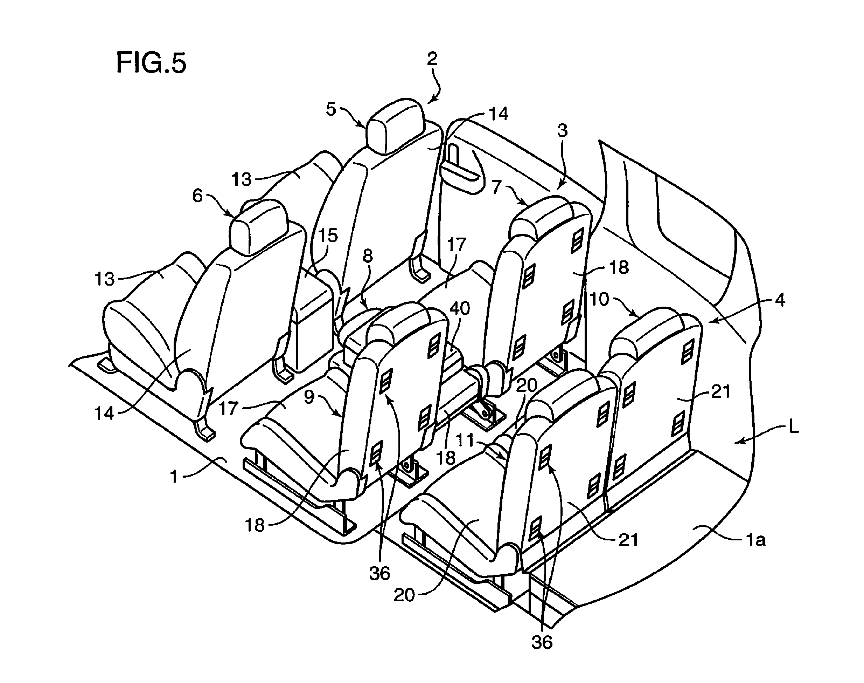

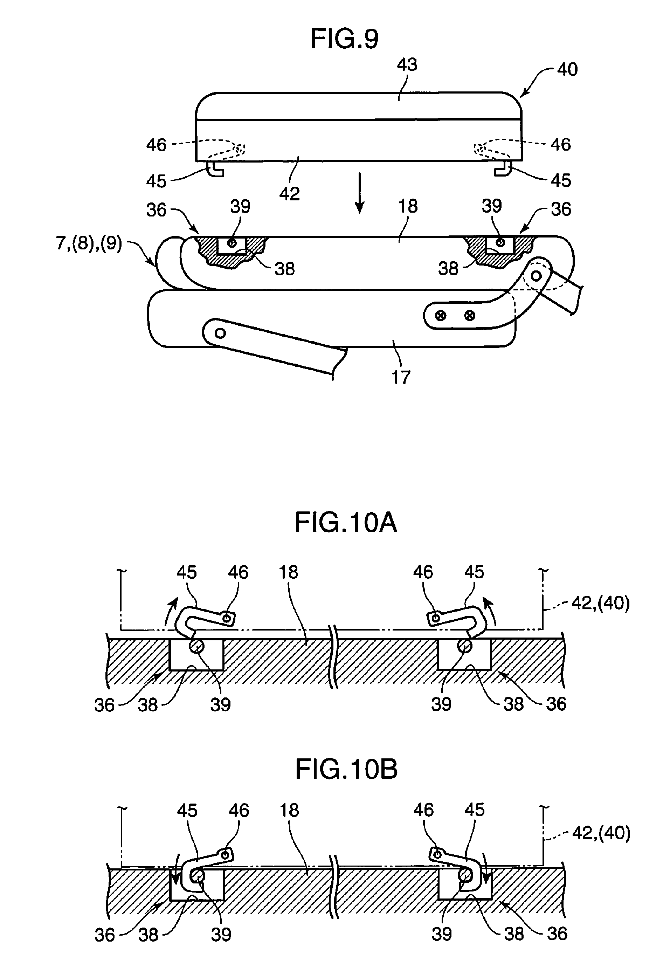

Each of the above unit seats 7 to 9 has a box support portion 36 provided in a back surface of the seat back 18 thereof, and adapted to support an after-mentioned storage box 40 (see, particularly, FIGS. 5 to 7) for allowing an article, such as a small article, to be stored therein. As shown in FIG. 2, the box support portion 36 includes four recesses 38 formed, respectively, in four corner regions of the back surface of the seat back 18, and four engagement shafts 39 provided inside the respective recesses 38 to extend in the lateral direction. The engagement shaft 39 in each of the recesses 38 is adapted to lock a corresponding one of four hooks 45 (see FIG. 9) of the after-mentioned storage box 40 so as to allow the storage box 40 to be demountably mounted to the seat back 18.

Except that the number of the unit seats is different from that in the second seat row 3, the third seat row 4 fundamentally has the same structure as that of the second seat row 3. Specifically, each of the unit seats 10, 11 in the third seat row 4 is supported displaceably between a standing position where the seat back 21 stands upwardly and a folded position where the seat back 21 is folded down on the seat cushion 20, wherein the seat cushion 20 is adapted to be moved frontwardly and downwardly in the folded position. Further, in the same manner as that in each of the unit seats 7 to 9 in the second seat row 3, the box support portion 36 is provided in a back surface of the seat back 21, to allow the after-mentioned storage box 40 to be releasably locked thereby.

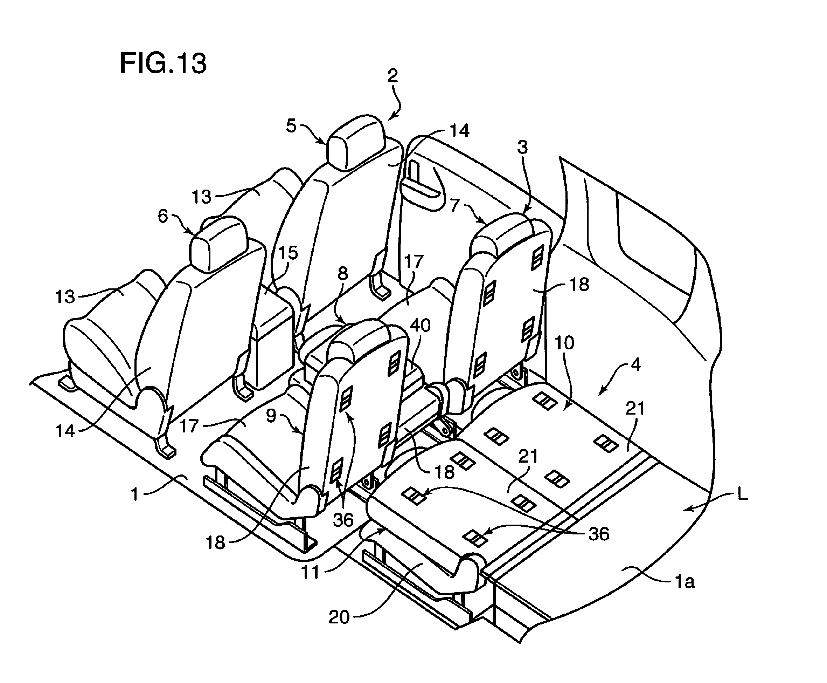

As shown in FIG. 1, a rear luggage area L having a luggage floor 1a defining a bottom surface thereof is formed in a rear end of the vehicle interior compartment, and the third seat row 4 is disposed in front of and adjacent to the rear luggage area L. As shown in FIG. 13, when the right and left seat backs 21 in the third seat row 4 are folded down, the seat cushion 20 is moved downwardly by a given distance, so that an approximately continuous flat floor surface is formed by the back surfaces of the seat backs 21 folded down on the respective seat cushions 20 (i.e., an upper surfaces of the seat backs 21 in the folded position) and the luggage floor 1a, and a wide luggage space having the above floor surface defining a bottom surface thereof is formed in a rear of the vehicle interior compartment.

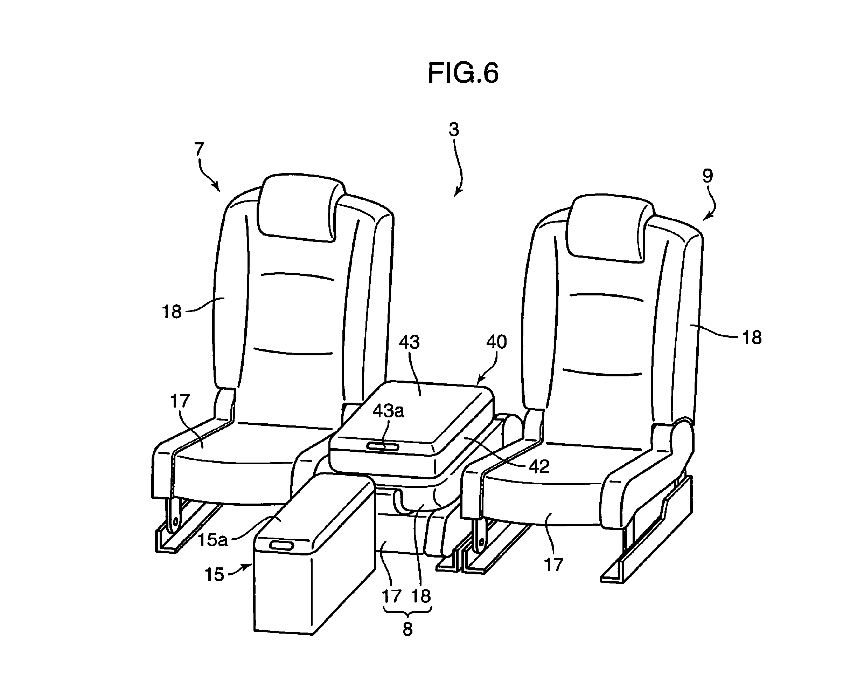

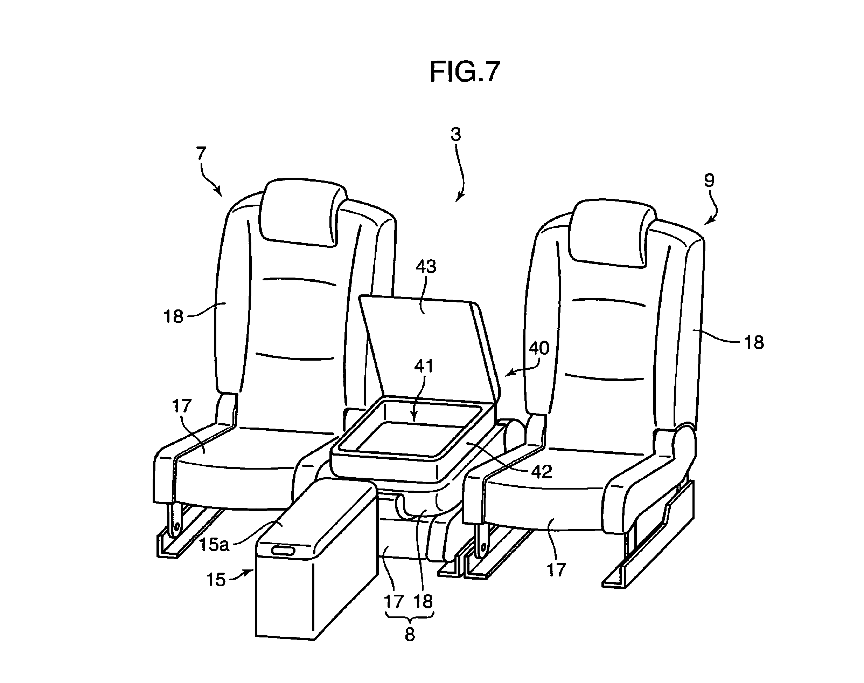

FIGS. 5 to 7 are perspective views showing a use mode of a storage box 40. FIGS. 5 to 7 show one example of the use mode where the storage box 40 is mounted to the seat back 18 of a laterally central one 8 of the unit seats 7 to 9 making up the second seat row 3. FIGS. 6 and 7 illustrate the console box 15 arranged between the driver seat 5 and the front passenger seat 6, in combination with the storage box 40.

The storage box 40 is used in the state after the seat back 18 is folded down on the seat cushion 17. As mentioned above, when the seat back 18 is folded down, the seat cushion 17 is displaced downwardly (i.e., lowered in height) in conjunction with the fold-down of the seat back 18. Thus, a height position of the storage box 40 supported relative to the back surface of the folded seat back 18 can be relatively lowered, as shown in FIG. 6.

FIG. 9 is an explanatory diagram showing an operation of mounting the storage box 40 to the back surface of the seat back of the unit seat. As shown in FIG. 9, the storage box 40 has a box body 42 and a lid member 43 (as will be described in detail later), wherein the box body 42 is provided with a plurality of (in this embodiment, four) hooks 45 protruding from a lower surface thereof.

The hooks 45 are pivotally supported relative to the lower surface of the box body 42 at positions (in this embodiment, four positions corresponding to the respective four box support portions 36 provided to the seat back 18), through pivot shafts 46. Each of the hooks 45 is biased by biasing means (not shown) in a specific rotation direction about the pivot shaft 46 (i.e., in a direction causing the hook 45 to be brought into engagement with a corresponding one of the engagement shafts 39 of the box support portion 36), in such a manner as to be held in a posture illustrated in FIG. 9, in a normal state.

In an operation of mounting the storage box 40 to the seat back 45, when the storage box 40 having the above hooks 45 is pressed against the back surface of the seat back 18, a lowermost portion of each of the hooks 45 is brought into contact with a corresponding one of the engagement shafts 39 of the box support portion 36 provided to the seat back 18, and thereby rotationally displaced about the pivot shaft 46 upwardly, as shown in FIG. 10A. Then, when the storage box 40 is further pressed downwardly, a distal edge of the hook 45 is moved beyond the engagement shaft 39, as shown in FIG. 10B. Thus, the hook 45 is rotated by a biasing force of the biasing means, and brought into engagement of the engagement shaft 39, so that the storage box 40 is fixed to the seat back 18.

The storage box 40 has an operation lever (not shown) provided at a given position thereof and associated with the hooks 45. Thus, in an operation of demounting the storage box 40 from the seat back 40, the operation lever can be manually moved to rotate the hooks 45 in a given direction (the arrowed direction in FIG. 10A) so as to release the engagement between respective ones of the hooks 45 and the engagement shafts 39 to allow the storage box 40 to be pulled upwardly.

Returning to FIGS. 6 and 7, a structure of the storage box 40 will be more specifically described. As shown in FIGS. 6 and 7, the storage box 40 includes a box body 42 internally having a storage space 41 to store an article, such as a small article, therein, and a lid member 43 pivotally supported relative to a rear end of the box body 42 through a hinge mechanism (not shown) or the like. The storage space 41 is defined in the box body 42 in such a manner as to be opened upwardly when the box body 42 is supported relative to the back surface of the seat back 18 in the state after being folded down on the seat cushion 17, as shown in FIGS. 6 and 7. In this state, a top opening of the box body 42 is openably closed by the lid member 43. Although not illustrated, a fastening device, such as a magnet fastener (not shown), is provided between respective mating surfaces of the box body 42 and the lid member 43, to allow the lid member 43 to be held in a closed position (the position in FIG. 6) in a normal state.

When a passenger manually pulls the lid member 43 held in the closed position, upwardly while putting his/her fingers in a grip recess 43a formed in a front end of the lid member 43, the lid member 43 is rotationally displaced about the rear end thereof upwardly, and thereby the storage space 41 of the box body 42 is opened upwardly, as shown in FIG. 7. After the lid member 43 is manually opened to expose the top opening of the box body 42, an operation of taking an article in and out of the storage space 41 will be performed through the top opening.

Although FIGS. 5 to 7 show one example where the storage box 40 is mounted to the seat back 18 of the laterally central one 8 of the three unit seats 7 to 9 making up the second seat row 3, the storage box 40 may be used in a mode where it is mounted to another rear passenger seat, i.e., one of the unit seats 7, 9 on the right and left sides of the laterally central unit seat 8, or one of the unit seats 10, 11 in the third seat row 4.

As above, in the vehicle having, on the floor panel 1, the second and third seat rows 3, 4 made up of the plurality of unit seats 7 to 9, 10, 11, the storage box structure according the first embodiment comprises the storage box 40 adapted to store an article therein and to be supported relative to the back surface of each of the seat backs 18, 21 of the unit seats 7 to 9, 10, 11, wherein each of the seat backs 18, 21 is supported displaceably between the standing position where it stands upwardly, and the folded position where it is folded down on a corresponding one of the seat cushions 17, 20, and the storage box 40 includes the box body 42 having the storage space 41 defined to be opened upwardly when the box body 42 is supported relative to the back surface of the seat back 18 (or 21) set in the folded position, and the lid member 43 adapted to openably close a top opening of the box body 42, and wherein the storage box 40 is adapted to be releasably locked relative to the box support portion 36 provided in each of the back surfaces of the seat backs 18, 21. Thus, the storage box structure according the first embodiment has an advantage of being able to achieve an excellent balance between ensuring of a maximum seating capacity and improvement in usability of the storage box.

Specifically, in the first embodiment, the box support portion 36 adapted to support the storage box 40 for storing an article therein is provided to each of the seat backs 18, 21 of the unit seats 7 to 9, 10, 11 each serving as a rear passenger seat. Thus, differently, for example, from a storage box structure designed to mount the storage box 40 onto the floor panel 1 in the conventional manner, the storage box structure according to the first embodiment has an advantage of being able to store an article using the storage box 40 according to need while maximizing a maximum seating capacity, without the need for sacrificing an installation space of the unit seats 7 to 9, 10, 11 (i.e., without the need for reducing the number of passenger seats) to ensure a mounting position of the storage box 40.

In addition, the storage space 41 of the storage box 40 is defined to be opened upwardly when the seat back 18 (or 21) supporting the storage box 40 is displaced to the folded position. Thus, when the seat back 18 (or 21) is folded down to use the storage box 40 supported relative to the back surface of the seat back 18 (or 21), a passenger can readily access to the storage space 41 of the storage box 40 from the top opening of the storage space 41 so as to take an article in and out of the storage box 40. Furthermore, the lid member 43 adapted to openably close the storage space 41 is located on an upper side relative to the box body 42. This provides an advantage of being able to manually open and close the lid member 43 in an easy manner.

In the first embodiment, the storage box 40 is adapted to be releasably locked relative to the box support portion 36 provided to each of the seat backs 18, 21 of the unit seats 7 to 9, 10, 11. This provides an advantage of being able to more adequately ensure passenger comfort in the vehicle interior compartment in a non-use mode of the storage box 40, for example, by demounting the storage box 40 from the seat back 18 (or 21) and moving the storage box 41 to a position causing no obstruction.

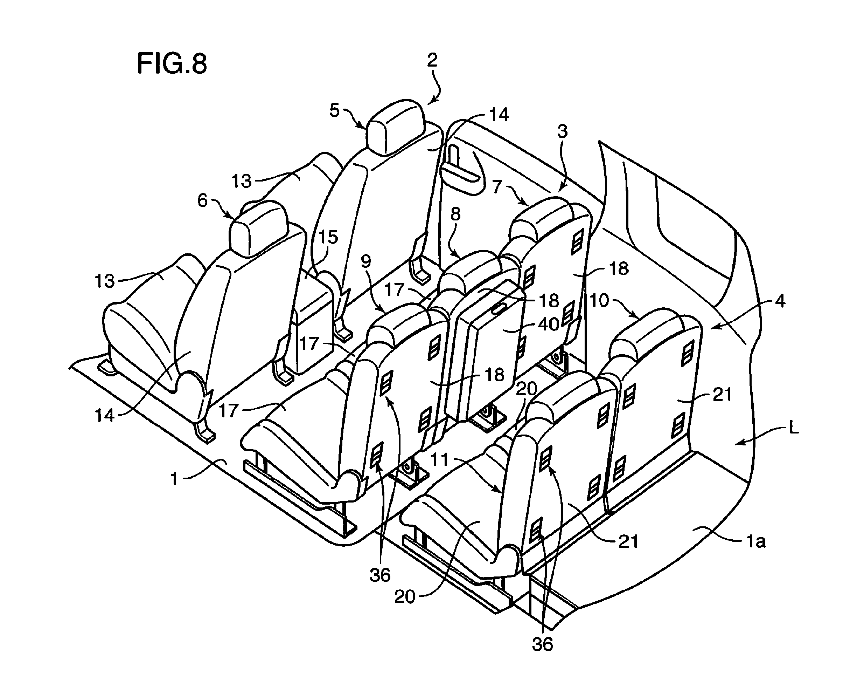

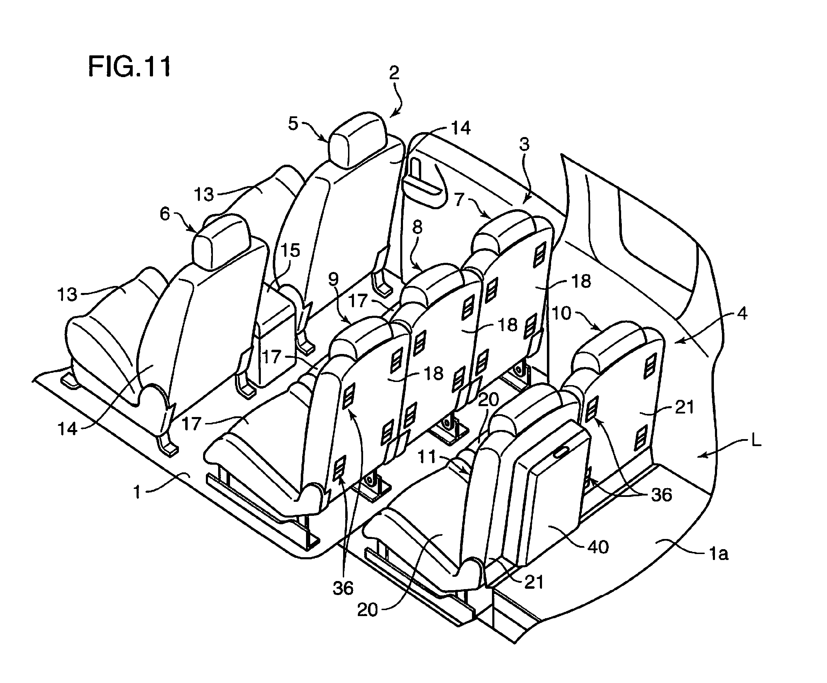

For example, in a situation where all the unit seats 7 to 9, 10, 11 in the second and third seat rows 3, 4 are occupied by passengers, and thereby all the seat backs 18, 21 of the unit seats 7 to 9, 10, 11 are in the standing position, if the storage box 40 is mounted to one of the seat backs 18 in the second and third seat rows 3, 4, as shown in FIG. 8, the presence of the storage box 40 protruding rearwardly from the back surface of the seat back 18 is likely to cause oppressive feeling of the passenger seated in the third seat row 4. In contrast, the storage box 40 in the first embodiment is demountable relative to the seat back 18. Thus, in the non-use mode of the storage box 40, the storage box 40 can be demounted from the seat back 18, and then stored in the rear luggage area L, or re-mounted to one of the seat backs 21 in the third seat row 4, as shown in FIG. 11. This provides an advantage of being able to effectively prevent seating environment of a passenger from deteriorating due to the presence of the storage box 40 even in the situation where most of the unit seats are occupied by passengers, so as to more adequately ensure passenger comfort in the vehicle interior compartment in the non-use mode.

In the first embodiment, the box support portion 36 is provided to each of the seat backs 18, 21 of the unit seats 7 to 9, 10, 11 making up the second and third seat rows 3, 4. Thus, the mounting position of the storage box 40 can be flexibly changed depending on which of the unit seats 7 to 9, 10, 11 a passenger who intends to use the storage box 40 occupies. This provides an advantage of being able to more effectively improve usability of the storage box.

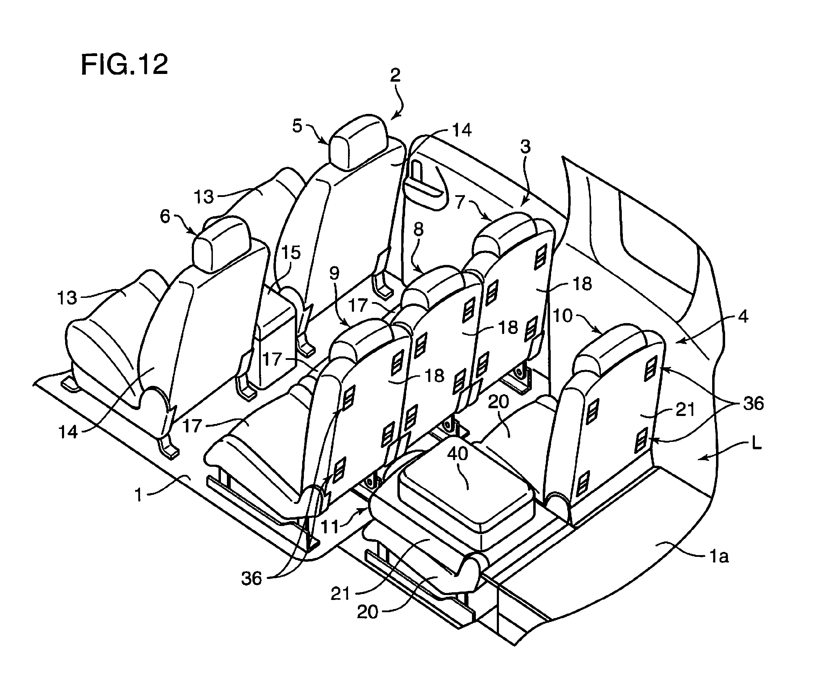

For example, when two passengers seated in the right and left unit seats 7, 9 in the second seat row 3 intend to use the storage box 40, the storage box 40 can be situated in a position allowing the passengers seated in the unit seats 7, 9 to readily access to the storage box 40, by folding the seat back 18 of the central unit seat 8, and supporting the storage box 40 by the box support portion 36 in the back surface of the folded seat back 18, as shown in FIGS. 5 and 6. This makes it possible to effectively improve usability of the storage box 40 for the two passengers. Further, when a passenger seated in a right one 10 of the unit seats 10, 11 in the third seat row 4 intends to use the storage box 40, the storage box 40 can be situated in a position allowing the passenger seated in the unit seat 10 to readily access to the storage box 40, by folding the seat back 21 of the other unit seat 11, and supporting the storage box 40 by the box support portion 36 in the back surface of the folded seat back 21, as shown in FIG. 12.

In the first embodiment, the box support portion 36 is provided to each of the seat backs 21 in the third seat row 4 arranged in adjacent relation to the rear luggage area L of the vehicle interior compartment. Thus, for example, in the non-use mode of the storage box 40, the storage box 40 can be supported by the box support portion 36 of one of the seat backs 21, and mounted in such a manner as to protrude toward the rear luggage area L, as shown in FIG. 11. This provides an advantage of being able to adequately ensure a mounting position of the storage box 40 in the non-use mode without narrowing a utility space for a passenger seated in the third seat row 4.

On the other hand, in a situation where it is necessary to store a relatively large article in the rear luggage area L, if the storage box 40 is mounted to one of the seat backs 21 in the third seat row 4 in the above manner, the storage box 40 is likely to hinder the storage of the relatively large article. In the first embodiment, the box support portion 36 is also provided to each of the seat backs 18 in the second seat row 3 located in a longitudinally intermediate position of the vehicle interior compartment. Thus, the storage box 40 can be mounted to one of the seat backs 18 in the second seat row 3, as shown in FIGS. 5 and 8, to effectively avoid the undesirable situation where the rear luggage area L is narrowed by the storage box 40. This provides an advantage of being able to appropriately ensure the mounting position of the storage box 40 while adequately maintaining a storage capacity of the rear luggage area L.

Further, even when the seat backs 21 in the third seat row 4 are folded down to expand the rear luggage area L as shown in FIG. 13, in order to store a fairly large luggage, such as a caddie bag, in a rear of the vehicle interior compartment, the storage box 40 can be mounted to one of the seat backs 18 in the second seat row 3, to effectively avoid an undesirable situation where the storage box 40 mounted to one of the seat backs 21 in the third seat row 4, for example, to form a floor surface approximately continuous with the luggage floor 1a, hinders the storage of the larger luggage. This provides an advantage of being able to allow even a fairly large luggage to be stored in the rear of the vehicle without difficulty.

When one of the seat backs 18 in the second seat row 3 located in the longitudinally intermediate position of the vehicle interior compartment is folded down, and the storage box 40 is mounted to the back surface of the folded seat back 18, as shown in FIG. 5, not only a passenger seated in the second seat row 3 but also a passenger seated in the first seat row 2 or the third seat row 4 can access to the storage box 40. This provides an advantage of being able to allow more passengers allowed to utilize the storage box 40.

In the first embodiment, each of the rear passenger seats each having the seat back provided with the box support portion 36, i.e., each of the unit seats 7 to 9, 10, 11 in the second and third seat rows 3, 4, includes the link mechanism comprising the links 26, 27, as shown in FIGS. 2 to 4 (i.e., a displacement mechanism adapted to displace the seat cushion 17 (or 20) downwardly by a given distance in conjunction with the displacement of the seat back 18 (or 21) toward the folded position). Thus, a height position of the back surface (i.e., mounting surface) of the seat back 18 (or 21) in the folded position can be relatively lowered. This provides an advantage of being able to effectively avoid an undesirable situation where a height position of the storage box 40 supported relative to the back surface of the folded seat back 18 (or 21) is excessively raised in a use mode of the storage box 40 to cause deterioration in usability of the storage box 40.

Specifically, in a storage box structure devoid of the above displacement mechanism, when the seat back 18 (or 21) is folded down on the seat cushion 17 (or 20), and the storage box 40 is mounted to the back surface (i.e., mounting surface) of the folded seat back 18 (or 21), a height position of the storage box 40 is likely to be excessively raised relative to a passenger seated in the surrounding unit seat to preclude the passenger from smoothly operate (e.g., open and close) the lid member 43 of the storage box 40. In contract, the storage box structure according to the first embodiment wherein each of each of the unit seats 7 to 9, 10, 11 is provided with the displacement mechanism adapted to displace the seat cushion 17 (or 20) downwardly by a given distance, has an advantage of being able to lower the height position of the back surface of the seat back 18 (or 21) in the use mode of the storage box 40 so as to avoid the above undesirable situation to effectively improve the usability of the storage box 40.

In the storage box structure according to the first embodiment, the box support portion 36 is provided to each of the seat backs 18, 21 of the unit seats 7 to 9, 10, 11 making up the second and third rows 3, 4. Alternatively, the box support portion 36 is provided to only a part of the seat backs 18, 21. In this case, the box support portion 36 is preferably provided to the seat back 18 of at least a central one 8 of the three unit seats 7 to 9 making up the second seat row 3. Specifically, in the storage box structure where the box support portion 36 is provided to at least the central unit seat 8, when the seat back 18 of the central unit seat 8 is folded down, and the storage box 40 is mounted to the back surface of the folded seat back 18, two passengers seated in the respective unit seats 7, 9 on right and left sides of the central unit seat 8 can use the storage box 40. Thus, differently from a storage box structure where the box support portion 36 is provided only to another unit seat (7 or 9), the above storage box structure has an advantage of being able to effectively enhance utility value of the storage box 40.

As one example of modification of the first embodiment, the box support portion 36 may be additionally provided to a seat other than the unit seats 7 to 9, 10, 11 making up the second and third seat rows 3, 4. For example, when the seat back 14 of the front passenger seat 6 is supported displaceably between a standing position where it stands upwardly, and a folded position where it is folded down on the seat cushion 13, the box support portion 36 may be provided to a back surface of the seat back 14 of the front passenger seat 6.

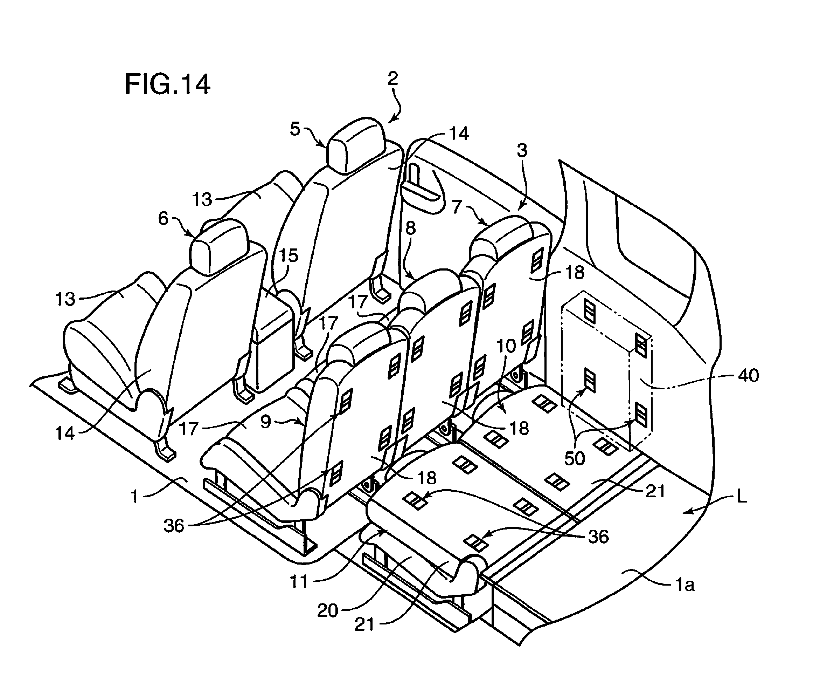

The first embodiment shows one example where the box support portion 36 adapted to releasably lock the storage box 40 is provided to each of the seat backs 18, 21 of the unit seats 7 to 9, 10, 11 each serving as a rear passenger seat. In addition, a box holding portion having the same structure as that of the box support portion 36 may also be provided to a lateral wall of the vehicle interior compartment. FIG. 14 shows one example of such a storage box structure. As shown in FIG. 14, a lateral wall of the rear of the vehicle interior compartment is provided with a box holding portion 50 having the same structure as that of the box support portion 36, and the storage box 40 can be releasably locked relatively to the box holding portion 50. In this case, the mounting position of the storage box 40 in the non-use mode can be easily ensured by utilizing a portion other than seat backs 18, 21. This provides an advantage of being able to variously utilize a space in the vehicle interior compartment while appropriately changing the mounting position of the storage box 40 between the box holding portion 50 provided to the lateral wall of the vehicle interior compartment and each of the box support portions 36 provided to the seat backs 18, 21 depending on a configuration of a luggage to be stored in the rear luggage area L, a seating position of a passenger, or the like.

### [SECOND EMBODIMENT]

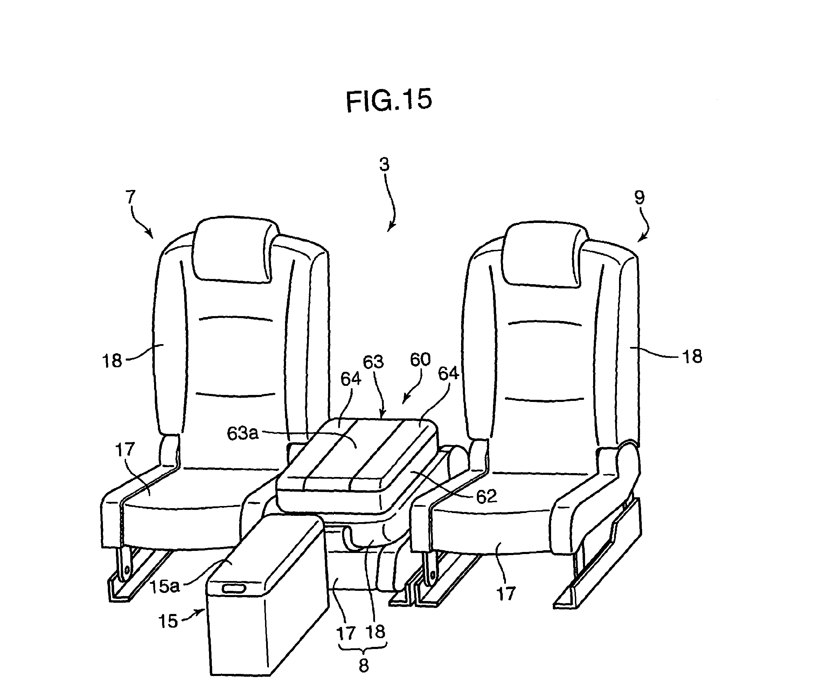

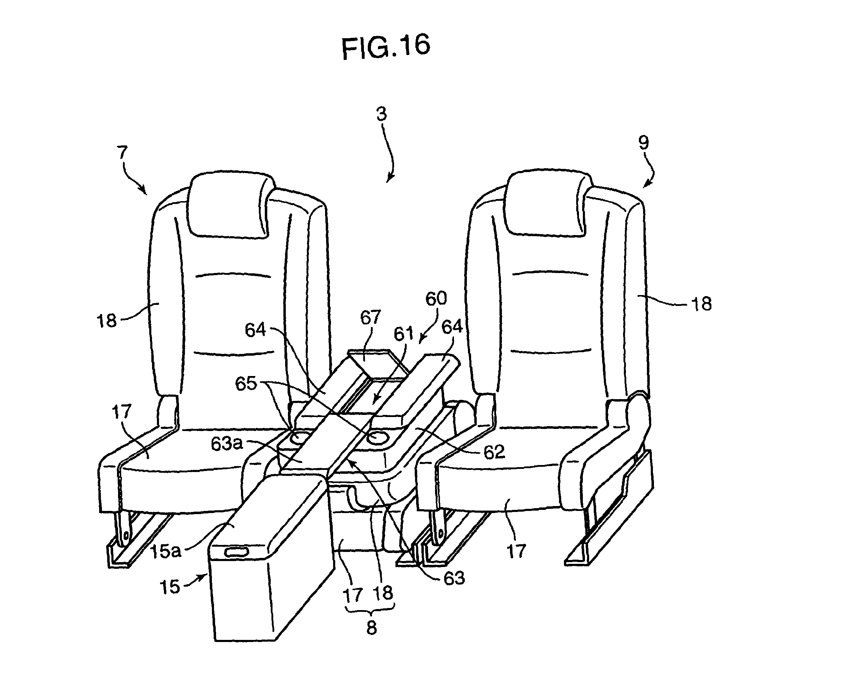

FIGS. 15 and 16 show a vehicle storage box structure according to a second embodiment of the present invention. As shown in FIGS. 15 and 16, a storage box 60 in the second embodiment comprises a box body 62, a pair of right and left armrest members 64 provided on a top surface of the box body 62, and a table member 63 provided between the right and left armrest members 64.

As shown in FIGS. 15 and 16, in a use mode of the storage box 60, a seat back 18 of a central one 8 of three unit seats 7 to 9 arranged in side-by-side relation in a widthwise (i.e., lateral) direction of a vehicle to make up a second seat row 3 is folded down on a seat cushion 17 of the laterally central unit seat 8, and the storage box 60 is mounted to a back surface of the folded seat back 18. For this purpose, the box support portion 36 illustrated in FIGS. 2, 9 and 10 is provided to the back surface of at least the unit seat 8, and a hook (not shown) equivalent to the hook 45 illustrated in FIGS. 9 and 10 is provided to a lower surface of the box body 62. The hook is adapted to be locked relatively to the box support portion 36 to allow the storage box 60 to be releasably supported relative to the seat back 18.

The table member 63 is formed to have an approximately flat top surface 63a adapted to allow an article to be placed thereon, and supported movably in a frontward-rearward (i.e., longitudinal) direction of the vehicle, relative to the box body 62 of the storage box 60. Further, the table member 63 is adapted to be slidably moved in the longitudinal direction between a normal position illustrated in FIG. 15 and a frontmost position where it largely protrudes frontwardly relative to the box body 62, as shown in FIG. 16, according to a manual operation of a passenger.

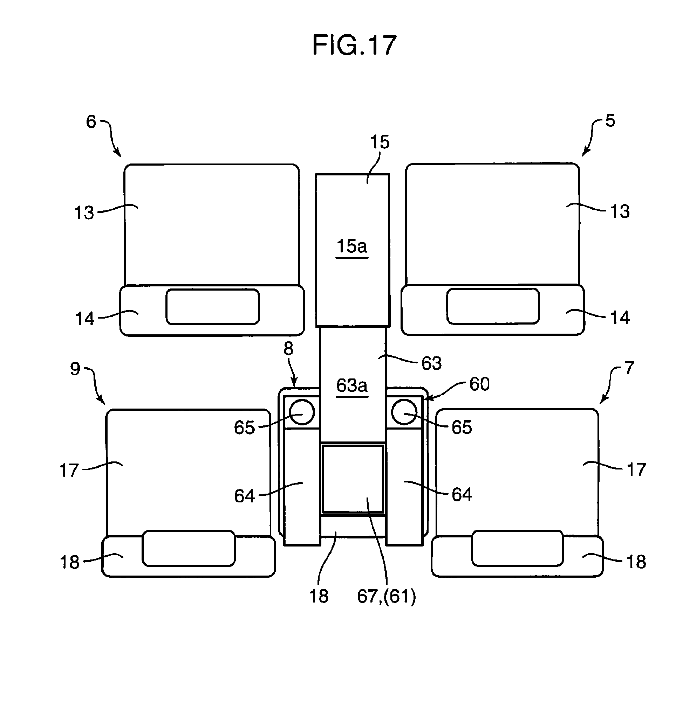

FIG. 17 is a schematic top view showing a state after the table member 63 is moved to the frontmost position. As shown in FIGS. 16 and 17, the table member 63 is adapted, when it is moved to the frontmost position, to allow an approximately continuous table surface (article mounting surface) to be formed between a top surface 63a of the table member 63 and a top surface 15a of the aforementioned console box 15. In this embodiment, the console box 15 having the top surface 15a forming an approximately continuous table surface in cooperation with the top surface 63a of the table member 63 corresponds to a mount member set forth in the appended claims.

The pair of right and left armrest members 64 are provided at positions allowing two passengers seated in the respective unit seats adjacent to the unit seat 8 having the storage box 40 mounted thereto (i.e., the respective unit seats 7, 9 located on right and left sides of the laterally central unit seat 8) to place their elbows thereon, and supported relatively to the box body 62 movably in the longitudinal direction, in the same manner as that in the table member 63. Each of the armrest members 64 is adapted to be slidably moved in the longitudinal direction between a normal position illustrated in FIG. 15 and a rearmost position where it protrudes rearwardly relative to the box body 62 by a given distance, as shown in FIG. 16, according to a manual operation of a passenger.

In the above storage box structure, when each of the armrest members 64 is moved from the normal position illustrated in FIG. 15 to the rearmost position illustrated in FIG. 16, a rear end of the armrest member 64 is located in a vicinity of a flank of a passenger seated in the unit seat 7 (or 9). That is, each of the armrest members 64 is adapted to be moved to the rearmost position illustrated in FIG. 16, in such a manner that the rear end of the armrest member 64 is located at a position allowing an elbow of the passenger to be adequately placed thereon.

The box body 62 of the storage box 60 has a pair of right and left cup holders 65 provided in a front end thereof. Each of the cup holders 65 is formed as a concave portion capable of receiving therein a bottom portion of a beverage container, such as a beverage can or plastic bottle, and adapted to be covered (i.e., concealed) by a front end of a corresponding one of the armrest members 64 set in the normal position illustrated in FIG. 15, from thereabove. Each of the cup holders 65 is also adapted to be exposed to the outside (i.e., placed in a usable state) in conjunction of the longitudinal movement of the corresponding armrest member 64 from the normal position toward the rearmost position illustrated in FIG. 16.

As shown in FIG. 16, the box body 62 has a storage space 61 adapted to store an article, such as a small article, therein, and defined to be opened upwardly when the said box body 62 is supported relative to the back surface of the seat back 18 set in the folded position. The storage box 60 includes a lid member 67 pivotally supported relative to a rear edge of the box body 62 in such a manner as to openably close a top opening of the storage space 61. The lid member 67 closing the storage space 61 is adapted to be covered (i.e., concealed) by the table member 63 set in the normal position, and exposed to the outside in conjunction with the longitudinal movement of the table member 63 toward the frontmost position illustrated in FIG. 16.

As mentioned above, in the second embodiment, the storage box 60 capable of storing an article therein is adapted to be mounted to the seat back 18 of the unit seat 8 serving as a rear passenger seat, and the storage space 61 of the storage box 60 is defined to be opened upwardly when the box body 62 is supported relative to the back surface of the seat back 18 set in the folded position. Thus, the storage box structure according to the second embodiment has an advantage of being able to achieve an excellent balance between ensuring of a maximum seating capacity and improvement in usability of the storage box, as with the first embodiment.

In the second embodiment, the table member 63 having an approximately flat top surface 63a is provided on the top surface of the box body 62 of the storage box 60. Thus, a passenger can place an article, such as a small article, on the top surface 63a of the table member 63 to conveniently use the article while maintaining the article in a stable state. In addition, the table member 63 has an advantage of being able to use the storage box for another purpose other than the purpose of storing an article therein, and thereby more improve utility of the storage box.

Particularly, in the second embodiment, the table member 63 is supported movably in the longitudinal direction of the vehicle, relative to the box body 62 of the storage box 60 in the state after being mounted to the seat back 18 set in the folded position, in such a manner that the top surface 63a of the table member 63 in the state after being moved to a frontmost position in a movable range thereof forms an approximately continuous table surface in cooperation with the top surface 15a of the console box 15 disposed in front of the unit seat 8. This provides an advantage of being able to readily form a wide table surface capable of allowing even a relatively large article to be placed thereon, in the vehicle interior compartment.

Specifically, in the second embodiment, the table member 63 is adapted to be moved to the frontmost position in the movable range in such a manner as to form an approximately continuous table surface between the top surface 63a of the table member 63 and the top surface 15a of the console box 15 located in front of the table member 63. This provides an advantage of being able to form a longitudinally-continuous wide table surface in the vehicle interior compartment using a simple structure, and reliably support an article, e.g., even a large article which cannot be supported only by the table member 63.

In the second embodiment, in the vehicle having the second seat row 3 made up of the three unit seats 7 to 9 arranged behind a first seat row 2 made up of a driver seat 5 and a front passenger seat 6, the table member 63 is adapted to be moved frontwardly relative to the box body 62 of the storage box 60 mounted to the seat back 18 in the second seat row 3, in such a manner as to form an approximately continuous table surface between the top surface 63a of the table member 63, and the top surface 15a of the console box 15 provided between the driver seat 5 and the front passenger seat 6. Thus, a wide table surface allowing passengers seated in both the first and second seat rows 2, 3 to access thereto can be formed based on a simple and economical structure utilizing the existing console box 15. This provides an advantage of being able to allow more passengers to place an article or the like on the table surface, and more effectively achieve improvement in utility of the storage box 60 based on the table member 63.

Particularly, in the second embodiment, the storage box 60 with the table member 63 is mounted to the seat back 18 of the laterally central unit seat 8 in the second seat row 3 made up of the three unit seats (three rear passenger seats) 7 to 9 arranged in side-by-side relation in the lateral direction of the vehicle, and the table member 63 is adapted to be moved frontwardly relative to the box body 62 of the storage box 60 in such a manner as to form an approximately continuous table surface between the table member 63 and the console box 15. Thus, the table surface can be formed at a position accessible by each of two passengers seated in the respective unit seats 7, 9 on the right and left sides of the laterally central unit seat 8. This provides an advantage of being able to more effectively enhance the utility value of the table member 63, as compared with a storage box structure where the storage box 60 with the table member 63 is mounted to another unit seat (7 or 9).

In the second embodiment, the armrest members 64 are disposed laterally on both sides of the table member 63 provided to the laterally central unit seats 8, at positions allowing two passengers seated in the respective unit seats 7, 9 on the right and left sides of the laterally central unit seat 8 to place their elbows thereon. This provides an advantage of being able to allow the passengers seated in the respective unit seats 7, 9 to have a more comfortable posture so as to effectively improve passenger comfort during seating. The armrest members 64 provided to the storage box 60 in this manner provides an advantage of being able to expand the functions of the storage box 60 so as to enhance the utility value of the storage box 60 to allow a limited space in the vehicle interior compartment to be more effectively utilized.

In addition, each of the armrest members 64 is supported movably in the longitudinal direction of the vehicle, relative to the seat back 18. This provides an advantage of being able to adjust a longitudinal position of the armrest member 64 in conformity to a position of the passenger's elbow (in the second embodiment, move the armrest member 64 to the rearmost position illustrated in FIG. 16) so as to more adequately support the passenger's elbow by the armrest member 64.

In the second embodiment, the cup holders 65 disposed laterally on both sides of the table member 63 are adapted to be selectively concealed and exposed in conjunction with the longitudinal movement of the armrest members 64. Thus, in a normal state, each of the armrests members 64 can be set at a position (the normal position illustrated in FIG. 15) where it conceals a corresponding one of the cup holders 65, to effectively reduce an overall size of the storage box 60. Then, as needed, the armrests members 64 can be moved to the rearmost position illustrated in FIG. 16 to expose the cup holders 65 so as to adequately hold a beverage container or the like using the cup holders 65.

In the second embodiment, although the seat back 18 of the laterally central one 8 of the unit seats 7 to 9 making up the second seat row 3 is folded down on the seat cushion 17 of the laterally central unit seat 8, and the storage box 60 with the table member 63 is mounted to the back surface of the folded seat back 18, whereafter the table member 63 is moved frontwardly relative to the box body 62 of the storage box 60 to form an approximately continuous table surface between the top surface 63a of the table member 63 and the top surface 15a of the console box 15, a member (mount member set forth in the appended claims) located in front of the table member 63 to form the approximately continuous table surface in cooperation with the table member 63 is not limited to the console box 15.

For example, if the seat back 14 of the front passenger seat 6 is adapted to be folded down on the seat cushion 13, a back surface of the seat back 14 (i.e., a top surface of the folded seat back 14) of the front passenger seat 6 may be used for forming the approximately continuous table surface. Specifically, in this case, after the seat back 18 of the unit seat 9 located behind the front passenger seat 6, in the second seat row 3, is folded down, and the storage box 60 with the table member 63 is mounted to the back surface of the folded seat back 18, the table member 63 may be moved frontwardly relative to the box body 62 of the storage box 60 to form an approximately continuous table surface between the top surface 63a of the table member 63 and the back surface of the folded seat back 14 of the front passenger seat 6. Alternatively, after the seat back 21 of either one of the unit seats 10, 11 making up the rearmost third seat row 4 is folded down, and the storage box 60 with the table member 63 is mounted to the back surface of the folded seat back 21, the table member 63 may be moved frontwardly relative to the box body 62 of the storage box 60 to form an approximately continuous table surface between the top surface 63a of the table member 63 and the back surface of the folded seat back 18 in the second seat row 3.

## Claims

1. A storage box structure for a vehicle having a plurality of passenger seats (5, 6, 7 to 9, 10, 11) provided on a floor panel (1) and each equipped with a seat cushion (13, 17, 20) and a seat back (14, 18, 21) adapted to stand upwardly from a rear end of said seat cushion (13, 17, 20), said storage box structure comprising a storage box (40, 60) adapted to store an article therein and to be supported relative to a back surface of said seat back of at least one (7 to 9, 10, 11) of said plurality of passenger seats, wherein:
said seat back (18, 21) of said at least one passenger seat (7 to 9, 10, 11) is supported displaceably between a standing position where it stands upwardly, and a folded position where it is folded down on said seat cushion (17, 20); and
said storage box (40, 60) includes a box body (42, 62) having a storage space (41, 61) defined to be opened upwardly when said box body (42, 62) is supported relative to the back surface of said seat back (18, 21) set in said folded position, and a lid member (43, 67) adapted to openably close a top opening of said box body (42, 62), said storage box (40, 60) being adapted to be releasably locked relative to a box support portion (36) provided in said back surface of said seat back (18, 21) of said at least one passenger seat (7 to 9, 10, 11).

2. The storage box structure as defined in claim 1, wherein said vehicle has, on said floor panel (1), a seat row (3) made up of three (7 to 9) of said plurality of passenger seats, said three passenger seats (7 to 9) being arranged in side-by-side relation in a lateral direction of said vehicle, wherein said at least one passenger seat comprises at least a central one (8) of said three passenger seats (7 to 9), and said box support portion (36) is provided to the seat back (18) of at least said central passenger seat (8).

3. The storage box structure as defined in claim 1 or 2, wherein said at least one passenger seat comprises two or more (7 to 9, 10, 11) of said plurality of passenger seats, wherein said box support portion (36) is provided to each of said seat backs (18, 21) of said two or more passenger seats (7 to 9, 10, 11), to allow said storage box (40, 60) to be selectively mounted to either one of said two or more seat backs (18, 21).

4. The storage box structure as defined in claim 3, wherein said two or more passenger seats (10, 11) are disposed in front of and adjacent to a rear luggage area (L) of a vehicle interior compartment.

5. The storage box structure as defined in any one of claims 1 to 4, wherein said vehicle has, on said floor panel (1), at least three seat rows (2, 3, 4) which are arranged parallel to each other in a longitudinal direction of said vehicle and each of which is made up of two or more of said plurality of passenger seats (5, 6, 7 to 9, 10, 11), said two or more passenger seats being arranged in side-by-side relation in a lateral direction of said vehicle, wherein said at least one passenger seat is comprised in a longitudinally intermediate one (3) of said at least three seat rows (2, 3, 4), and said box support portion (36) is provided to at least one of said seat backs (18) in said longitudinally intermediate seat row (3).

6. The storage box structure as defined in any one of claims 1 to 5, wherein said at least one passenger seat (7 to 9, 10, 11) having the seat back (18, 21) provided with said box support portion (36) includes a displacement mechanism adapted to displace said seat cushion (17, 20) downwardly by a given distance in conjunction with said displacement of said seat back (18, 21) toward said folded position.

7. The storage box structure as defined in any one of claims 1 to 6, wherein said storage box (40, 60) is adapted to be releasably locked relative to a box holding portion (50) provided to a lateral wall of said vehicle interior component.

8. The storage box structure as defined in claim 1, wherein said storage box (60) includes a table member (63) adapted to allow an article to be placed thereon, said table member (63) being supported movably in a longitudinal direction of said vehicle, relative to said box body (62) of said storage box (60) in a state after being mounted to said seat back (18) set in said folded position, in such a manner that a top surface (63a) of said table member (63) in a state after being moved to a frontmost position in a movable range thereof forms an approximately continuous table surface in cooperation with a top surface (15a) of a mount member (15) disposed in front of said at least one passenger seat (7 to 9, 10, 11).

9. The storage box structure as defined in claim 8, wherein said vehicle has, on said floor panel (1), a first seat row (2) made up of a driver seat (5) and a front passenger seat (6), and a second seat row (3) made up of two or more (7 to 9) of said plurality of passenger seats and arranged behind said first seat row (2), wherein:
said at least one passenger seat is comprised in said second seat row (3);
said storage box (60) with said table member (63) is adapted to be supported relative to at least one of the seat backs (18) in said second seat row (3); and
said mount member comprises a console box provided between said driver seat (5) and said front passenger seat (6).

10. The storage box structure as defined in claim 8 or 9, wherein said vehicle has, on said floor panel (1), a seat row (3) made up of three (7 to 9) of said plurality of passenger seats, said three passenger seats (7 to 9) being arranged in side-by-side relation in a lateral direction of the vehicle, wherein said at least one passenger seat comprises a central one (8) of said three passenger seats (7 to 9), and said storage box (60) with said table member (63) is adapted to be supported relative to the seat back (18) of said central passenger seat (8).

11. The storage box structure as defined in any one of claims 8 to 10, wherein said storage box (60) includes a pair of armrest members (64) disposed laterally on both sides of said table member (63) and adapted to allow an elbow of a passenger to be placed thereon, each of said armrest members (64) being supported movably in the longitudinal direction of said vehicle, relative to said box body (62) of said storage box (60) in a state after being mounted to said seat back (18) set in said folded position.

12. The storage box structure as defined in claim 11, wherein said storage box (60) includes a pair of cup holders (65) disposed laterally on both sides of said table member (63) and adapted to be selectively concealed and exposed in conjunction with the longitudinal movement of said armrest members (64).
